(19) Europäisches Patentamt
European Patent Office
Office européen des brevets

(11) EP 3 893 047 B1

(12) # EUROPEAN PATENT SPECIFICATION

(45) Date of publication and mention of the grant of the patent:
**30.08.2023 Bulletin 2023/35**

(21) Application number: **19893805.2**

(22) Date of filing: **21.10.2019**

(51) International Patent Classification (IPC):
***G02F 1/13357*** *(2006.01)* ***F21S 2/00*** *(2016.01)*
***G02B 6/00*** *(2006.01)* ***F21V 8/00*** *(2006.01)*

(52) Cooperative Patent Classification (CPC):
**G02B 6/005; G02B 6/0061**

(86) International application number:
**PCT/JP2019/041368**

(87) International publication number:
**WO 2020/116045 (11.06.2020 Gazette 2020/24)**

(54) **OPTICAL LAMINATE**
OPTISCHES LAMINAT
STRATIFIÉ OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2018 JP 2018229420**

(43) Date of publication of application:
**13.10.2021 Bulletin 2021/41**

(73) Proprietor: **Nitto Denko Corporation**
**Ibaraki-shi, Osaka 567-8680 (JP)**

(72) Inventors:
- **MORISHIMA Ryota**
  **Ibaraki-shi, Osaka 567-8680 (JP)**
- **HATTORI Daisuke**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(56) References cited:
**WO-A1-2017/086005** **JP-A- H1 010 325**
**JP-A- H11 224 519** **JP-A- 2003 315 792**
**JP-A- 2018 123 299** **JP-A- 2018 123 299**
**US-A1- 2010 157 623** **US-A1- 2011 149 554**
**US-A1- 2015 177 441** **US-A1- 2018 224 696**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### Technical Field

The present invention relates to an optical laminate.

### Background Art

In the lamination of a light guide plate and a peripheral optical member (e.g., a reflective plate, a diffusing plate, a prism sheet, or a light extraction film) in an optical apparatus configured to extract light with the light guide plate (e.g., an image display apparatus or a lighting apparatus), a technology including performing the lamination via a low-refractive index layer or an adhesion layer that is patterned (i.e., has an air portion) has been known. It has been reported that according to such technology, the low-refractive index layer or the air portion of the adhesion layer is utilized, and hence light utilization efficiency is improved as compared to that in the case where the lamination is simply performed with a pressure-sensitive adhesive alone. According to such technology, however, there is a problem in that the strength of the laminate of the light guide plate and the peripheral optical member as an integrated product is insufficient. US 2010/0157623 A1 describes an optical laminate that is a planar light-emitting apparatus comprising: a light source; a light-guiding member configured to allow light from the light source to propagate therethrough; a reflecting member disposed such that the reflecting member faces the light-guiding member, the reflecting member reflecting the light propagating through the light-guiding member; and an adhesive member configured to attach the light-guiding member and the reflecting member to each other, wherein a distribution of an adhesive region of the adhesive member on a surface of the light-guiding member is determined on the basis of a brightness distribution of the planar light-emitting apparatus in the case where the adhesive member is uniformly distributed on the surface of the light-guiding member, and the adhesive member is formed between the light-guiding member and the reflecting member in accordance with the distribution of the adhesive region. US 2011/149554 A1, JP H10 10325 A and JP 2018 123299 A also describe optical laminates and/or light-guides.

### Citation List

### Patent Literature

[PTL 1] JP 10-62626 A

### Summary of Invention

### Technical Problem

The present invention has been made to solve the conventional problem, and a primary object of the present invention is to provide an optical laminate, which has high brightness, is suppressed in brightness unevenness, and is excellent in strength as an integrated product.

### Solution to Problem

The invention is set out in the appended claims. In particular, an optical laminate according to the present invention comprises: a light guide plate; an adhesion layer; and an optical member laminated on the light guide plate via the adhesion layer. The adhesion layer is formed in a dot pattern in plan view, and a density of the dots has such a gradient as to increase from a light-entering side of the light guide plate along a light-guiding direction thereof. In the optical laminate, low-refractive index reinforcing portions are arranged in both end portions of the light guide plate along the light-guiding direction.

In the present invention, the low-refractive index reinforcing portions each include a substrate, a low-refractive index layer formed on the substrate, and pressure-sensitive adhesive layers arranged as outermost layers on both surfaces thereof.

In one embodiment of the present invention, the low-refractive index layer has a refractive index of 1.25 or less.

In one embodiment of the present invention, a total width of the low-refractive index reinforcing portions accounts for 10% or less of a width of the light guide plate.

In one embodiment of the present invention, the low-refractive index reinforcing portions each have a total light transmittance of 85% or more.

In one embodiment of the present invention, another low-refractive index reinforcing portion is further arranged

in an end portion of the light guide plate on a side opposite to the light-entering side.

Effects of Invention

According to the present invention, in the optical laminate including the light guide plate and the optical member, and including the adhesion layer of the dot pattern in plan view having the gradient of the dot density along the light-guiding direction of the light guide plate, the low-refractive index reinforcing portions are arranged in both the end portions of the light guide plate along the light-guiding direction. Accordingly, the optical laminate, which has high brightness, is suppressed in brightness unevenness, and is excellent in strength as an integrated product, can be achieved.

Brief Description of Drawings

FIG. 1 is a schematic sectional view of an optical laminate according to one embodiment of the present invention.

FIG. 2 is a schematic plan view for illustrating a state in which the optical member of the optical laminate of FIG. 1 is removed.

FIG. 3 is a schematic sectional view for illustrating an example of a low-refractive index reinforcing portion to be used in the optical laminate according to the embodiment of the present invention.

Description of Embodiments

Embodiments of the present invention are described below. However, the present invention is not limited to these embodiments.

A. Overall Configuration of Optical Laminate

FIG. 1 is a schematic sectional view of an optical laminate according to one embodiment of the present invention, and FIG. **2** is a schematic plan view for illustrating a state in which the optical member of the optical laminate of FIG. **1** is removed. An optical laminate **100** of the illustrated example includes a light guide plate **10** and an optical member **30** laminated on the light guide plate **10** via an adhesion layer **20.** As illustrated in FIG. **2**, the adhesion layer **20** is formed in a dot pattern in plan view, and the density of its dots has such a gradient as to increase from the light-entering side of the light guide plate along the light-guiding direction thereof (direction from the left side to the right side in the figure).

In the embodiment of the present invention, low-refractive index reinforcing portions **40** are arranged in both end portions of the light guide plate **10** along the light-guiding direction. When the adhesion layer of the dot pattern having such density gradient as described above is arranged, total reflection by air can be utilized in the end portion of the light guide plate on the light-entering side having a large light quantity. Accordingly, extremely satisfactory light propagation is achieved in the light guide plate. As a result, the brightness of the optical apparatus to which the optical laminate is applied can be improved, and the brightness unevenness (difference in lightness between a portion close to the light-entering side and a portion distant from the light-entering side) thereof can be significantly suppressed. Meanwhile, such adhesion layer has a nonuniform adhesive strength (specifically, its adhesive strength on the light-entering side is small, and its adhesive strength on a side opposite to the light-entering side is large). As a result, the strength of the optical laminate as an integrated product becomes insufficient. In the embodiment of the present invention, the low-refractive index reinforcing portions are arranged, and hence a sufficient strength of the optical laminate as an integrated product can be achieved. Further, each of the low-refractive index reinforcing portions to be used in the present invention has the following advantages: (1) the refractive index of the reinforcing portion itself is low, and hence the strength of the optical laminate as an integrated product can be secured while no reduction in light utilization efficiency is caused (and as a result, the brightness thereof is maintained at a high value and the brightness unevenness thereof is suppressed); and (2) the reinforcing portion can be formed into an elongated shape, and hence an influence on the display area of an image display apparatus to which the optical laminate is applied can be minimized.

Any appropriate shape may be adopted as the plan-view shape of each of the low-refractive index reinforcing portions **40**. Specifically, the low-refractive index reinforcing portions may be continuously formed along the light-guiding direction of the light guide plate as illustrated in FIG. **2**, or may be intermittently formed. When the low-refractive index reinforcing portions are continuously formed, for example, each of the low-refractive index reinforcing portions may be of such an elongated rectangular shape as illustrated in FIG. **2**, may be of a tapered shape, or may be of a trapezoidal shape. When each of the low-refractive index reinforcing portions is of a tapered shape, the low-refractive index reinforcing

portion may be of such a shape as to become thinner toward the light-entering side, or may be of such a shape as to become thinner toward the side opposite to the light-entering side. When the low-refractive index reinforcing portions are intermittently formed, for example, each of the low-refractive index reinforcing portions may be of a rectangular shape, may be of a dot shape, or may be of any other appropriate shape (e.g., a triangle, a square, a polygon, or a semicircle). The length (i.e., length along the light-guiding direction) of each of the low-refractive index reinforcing portions is preferably 50% or more, more preferably 60% or more, still more preferably 70% or more, particularly preferably 80% or more with respect to the total length of the light guide plate in the light-guiding direction. The upper limit of the length of each of the low-refractive index reinforcing portions is 100% with respect to the total length of the light guide plate in the light-guiding direction. That is, the low-refractive index reinforcing portions may be arranged over the entirety of the light-guiding direction of the light guide plate. When the length falls within such ranges, a sufficient reinforcing effect (i.e., the strength of the optical laminate as an integrated product) can be achieved. When the low-refractive index reinforcing portions are intermittently formed, the length of each of the low-refractive index reinforcing portions is the total length of the respective pieces. In addition, the lengths of the low-refractive index reinforcing portions may be identical to or different from each other. The width (i.e., length along a direction perpendicular to the light-guiding direction) of each of the low-refractive index reinforcing portions is preferably 5% or less with respect to the width of the light guide plate. The total width of the low-refractive index reinforcing portions is preferably 10% or less, more preferably 9% or less with respect to the width of the light guide plate. Meanwhile, the total width of the low-refractive index reinforcing portions may be, for example, 1% or more. When the width falls within such ranges, the strength of the optical laminate as an integrated product can be secured while the display area of the image display apparatus to which the optical laminate is applied is not adversely affected. The total light transmittance of each of the low-refractive index reinforcing portions is preferably 85% or more, more preferably 90% or more. When the total light transmittance falls within such ranges, the strength of the optical laminate as an integrated product can be secured while the display area of the image display apparatus to which the optical laminate is applied is not adversely affected.

The low-refractive index reinforcing portions may be arranged on both ends of the light guide plate along the light-guiding direction, or may be arranged on inner sides distant from both the ends by a certain distance each. The low-refractive index reinforcing portions are preferably arranged on both the ends of the light guide plate along the light-guiding direction or in the vicinities thereof. With such configuration, an influence on the display area can be minimized.

When the low-refractive index reinforcing portions are continuously formed, the low-refractive index reinforcing portions may be arranged in the central portion of the light guide plate in the light-guiding direction, or may be arranged at biased positions (e.g., on the light-entering side or the side opposite to the light-entering side). When the low-refractive index reinforcing portions are intermittently formed, the density at which the respective pieces are arranged may be uniform over the entirety of the light-guiding direction, or may change along the light-guiding direction.

As described above, the low-refractive index reinforcing portions only need to be arranged in both the end portions of the light guide plate along the light-guiding direction. Therefore, the low-refractive index reinforcing portions may also be arranged at any appropriate positions other than the above-mentioned positions. In one embodiment, another low-refractive index reinforcing portion may be further arranged in the end portion of the light guide plate on the side opposite to the light-entering side. With such configuration, a further reinforcing effect can be obtained.

The constituents of the optical laminate are specifically described below.

## B. Light Guide Plate

The light guide plate 10 may be typically formed of a film or plate-shaped product of a resin (preferably a transparent resin), or glass. Typical examples of such resin include a thermoplastic resin and a reactive resin (e.g., an ionizing radiation-curable resin). Specific examples of the thermoplastic resin include: (meth)acrylic resins, such as polymethyl methacrylate (PMMA) and polyacrylonitrile; a polycarbonate (PC) resin; polyester resins, such as PET; cellulose-based resins, such as triacetyl cellulose (TAC); cyclic polyolefin-based resins; and styrene-based resins. Specific examples of the ionizing radiation-curable resin include an epoxy acrylate-based resin and a urethane acrylate-based resin. Those resins may be used alone or in combination thereof.

The thickness of the light guide plate may be, for example, from 100 um to 100 mm. The thickness of the light guide plate is preferably 50 mm or less, more preferably 30 mm or less, still more preferably 10 mm or less.

The refractive index of the light guide plate is preferably 1.47 or more, more preferably from 1.47 to 1.60, still more preferably from 1.47 to 1.55. A difference between the refractive index of the light guide plate and the refractive index of the low-refractive index layer of each of the low-refractive index reinforcing portions is preferably 0.22 or more, more preferably from 0.22 to 0.40, still more preferably from 0.25 to 0.35. The refractive index of the light guide plate may be adjusted by appropriately selecting a material for forming the light guide plate.

C. Adhesion Layer

As described above, the adhesion layer 20 is formed in the dot pattern in plan view, and the density of the dots has such a gradient as to increase from the light-entering side of the light guide plate along the light-guiding direction. With such configuration, total reflection by air can be utilized in the end portion of the light guide plate on the light-entering side having a large light quantity. Accordingly, extremely satisfactory light propagation is achieved in the light guide plate. As a result, the brightness of the optical apparatus to which the optical laminate is applied can be improved, and the brightness unevenness (difference in lightness between a portion close to the light-entering side and a portion distant from the light-entering side) thereof can be significantly suppressed. The gradient of the dot density may continuously change along the light-guiding direction as illustrated in FIG. 2, or may change in a stepwise manner in each predetermined region along the light-guiding direction. For example, the dot density (average) of a region from the end on the light-entering side to 10% of the lengthwise direction of the light guide plate is preferably from 0% to 50%, and the dot density (average) of a region from the end on the side opposite to the light-entering side to 10% of the lengthwise direction of the light guide plate is preferably from 50% to 100%.

The adhesion layer may include an adhesive, or may include a pressure-sensitive adhesive. The adhesion layer preferably includes the adhesive. This is because pattern formation can be easily performed. The use of the adhesive enables the performance of the pattern formation by, for example, inkjet or printing. Any appropriate adhesive may be used as the adhesive. An active energy ray (e.g., UV or visible light)-curable adhesive is preferred. Specific examples of the active energy ray-curable adhesive include an acrylic adhesive, an epoxy-based adhesive, a vinyl-based adhesive, a thiol-based adhesive, a urethane-based adhesive, and a silicone-based adhesive. The active energy ray-curable adhesive and a thermosetting adhesive may be used in combination. The pressure-sensitive adhesive is, for example, a high-elasticity pressure-sensitive adhesive.

D. Optical Member

The optical member is, for example, any appropriate optical member that may be laminated on the light guide plate. The optical member is specifically, for example, a reflective plate, a diffusing plate, a prism sheet, a polarizing plate, a retardation film, a conductive film, a substrate, an image display cell, or an image display panel.

E. Low-refractive Index Reinforcing Portion

E-1. Overall Configuration of Low-refractive Index Reinforcing Portion

FIG. 3 is a schematic sectional view for illustrating the low-refractive index reinforcing portion that is used in accordance with the invention. The low-refractive index reinforcing portion 40 includes a substrate 41, a low-refractive index layer 42 formed on the substrate 41, and pressure-sensitive adhesive layers 43 and 44 arranged as outermost layers on both surfaces thereof. That is, the low-refractive index reinforcing portion is formed as a double-sided tape, and bonds the light guide plate and the optical member to each other with the pressure-sensitive adhesive layers on both the surfaces.

E-2. Substrate

The substrate 41 may be typically formed of a film or plate-shaped product of a resin (preferably a transparent resin) . Typical examples of such resin include a thermoplastic resin and a reactive resin (e.g., an ionizing radiation-curable resin). Specific examples of the thermoplastic resin include: (meth) acrylic resins, such as polymethyl methacrylate (PMMA) and polyacrylonitrile; polycarbonate (PC) resins; polyester resins, such as PET; cellulose-based resins, such as triacetyl cellulose (TAC); cyclic polyolefin-based resins; and styrene-based resins. Specific examples of the ionizing radiation-curable resin include an epoxy acrylate-based resin and a urethane acrylate-based resin. Those resins may be used alone or in combination thereof.

The thickness of the substrate is, for example, from 10 um to 100 $\mu$m, preferably from 10 um to 50 $\mu$m.

The refractive index of the substrate is preferably 1.47 or more, more preferably from 1.47 to 1.60, still more preferably from 1.47 to 1.55. When the refractive index falls within such ranges, light extracted from the light guide plate can be introduced into the image display cell without being adversely affected.

E-3. Low-refractive Index Layer

The low-refractive index layer typically has pores therein. The porosity of the low-refractive index layer is 50% or more as described above, and is preferably 70% or more, more preferably 80% or more. Meanwhile, the porosity is,

for example, 90% or less, preferably 85% or less. When the porosity falls within the ranges, the refractive index of the low-refractive index layer can be set within an appropriate range.

The refractive index of the low-refractive index layer is preferably 1.30 or less, more preferably 1.20 or less, still more preferably 1.15 or less. The lower limit of the refractive index may be, for example, 1.01. When the refractive index falls within such ranges, extremely excellent light utilization efficiency can be achieved in the laminated structure of the light guide plate and the peripheral member obtained via the low-refractive index reinforcing portion.

Any appropriate configuration may be adopted for the low-refractive index layer as long as the layer has the above-mentioned desired porosity and refractive index. The low-refractive index layer may be preferably formed through, for example, application or printing. Materials described in, for example, WO 2004/113966 A1, JP 2013-254183 A, and JP 2012-189802 A may each be adopted as a material for forming the low-refractive index layer. Specific examples thereof include: silica-based compounds; hydrolyzable silanes, and partial hydrolysates and dehydration condensates thereof; organic polymers; silanol group-containing silicon compounds; active silica obtained by bringing a silicate into contact with an acid or an ion-exchange resin; polymerizable monomers (e.g., a (meth)acrylic monomer and a styrene-based monomer); curable resins (e.g., a (meth)acrylic resin, a fluorine-containing resin, and a urethane resin); and combinations thereof.

The size of each of the pores (holes) in the low-refractive index layer refers to a major axis diameter out of the major axis diameter and minor axis diameter of the pore (hole) . The sizes of the pores (holes) are, for example, from 2 nm to 500 nm. The sizes of the pores (holes) are, for example, 2 nm or more, preferably 5 nm or more, more preferably 10 nm or more, still more preferably 20 nm or more. Meanwhile, the sizes of the pores (holes) are, for example, 500 nm or less, preferably 200 nm or less, more preferably 100 nm or less. The range of the sizes of the pores (holes) is, for example, from 2 nm to 500 nm, preferably from 5 nm to 500 nm, more preferably from 10 nm to 200 nm, still more preferably from 20 nm to 100 nm. The sizes of the pores (holes) may be adjusted to desired sizes in accordance with, for example, a purpose and an application.

The sizes of the pores (holes) may be quantified by a BET test method. Specifically, 0.1 g of the sample (formed pore layer) is loaded into the capillary of a specific surface area-measuring apparatus (manufactured by Micromeritics Instrument Corporation, ASAP 2020), and is then dried under reduced pressure at room temperature for 24 hours so that a gas in its pore structure may be removed. Then, an adsorption isotherm is drawn by causing the sample to adsorb a nitrogen gas, and its pore size distribution is determined. Thus, the pore sizes may be evaluated.

The haze of the low-refractive index layer is, for example, less than 5%, preferably less than 3%. Meanwhile, the haze is, for example, 0.1% or more, preferably 0.2% or more. The range of the haze is, for example, 0.1% or more and less than 5%, preferably 0.2% or more and less than 3%. The haze may be measured by, for example, such a method as described below. The haze is an indicator of the transparency of the low-refractive index layer.

The pore layer (low-refractive index layer) is cut into a size measuring 50 mm by 50 mm, and is set in a haze meter (manufactured by Murakami Color Research Laboratory Co. , Ltd.: HM-150), followed by the measurement of its haze. The haze value is calculated from the following equation.

$$\text{Haze (\%)} = [\text{diffuse transmittance (\%)} / \text{total light transmittance (\%)}] \times 100\ (\%)$$

The low-refractive index layer having the pores therein is, for example, a low-refractive index layer having a porous layer and/or an air layer in at least part thereof. The porous layer typically contains aerogel and/or particles (e.g., hollow fine particles and/or porous particles). The low-refractive index layer may be preferably a nanoporous layer (specifically a porous layer in which the diameters of 90% or more of micropores fall within the range of from $10^{-1}$ nm to $10^3$ nm).

Any appropriate particles may be adopted as the particles. The particles are each typically formed of a silica-based compound. Examples of the shapes of the particles include a spherical shape, a plate shape, a needle shape, a string shape, and a botryoidal shape. String-shaped particles are, for example, particles in which a plurality of particles each having a spherical shape, a plate shape, or a needle shape are strung together like beads, short fiber-shaped particles (e.g., short fiber-shaped particles described in JP 2001-188104 A), and a combination thereof. The string-shaped particles may be linear or may be branched. Botryoidal-shaped particles are, for example, particles in which a plurality of spherical, plate-shaped, and needle-shaped particles aggregate to form a botryoidal shape. The shapes of the particles may be identified through, for example, observation with a transmission electron microscope. The average particle diameter of the particles is, for example, from 5 nm to 200 nm, preferably from 10 nm to 200 nm. When the particles have the above-mentioned configuration, a low-refractive index layer having a sufficiently low refractive index can be obtained, and the transparency of the low-refractive index layer can be maintained. The term "average particle diameter" as used herein means a value determined from the specific surface area ($m^2/g$) of the particles, which is

measured by a nitrogen adsorption method (BET method), by the equation "average particle diameter=(2,720/specific surface area)" (see JP 01-317115 A).

The thickness of the low-refractive index layer is preferably from 0.2 um to 5 μm, more preferably from 0.3 um to 3 um. When the thickness of the low-refractive index layer falls within such ranges, a damage-preventing effect exhibited by the present invention becomes significant.

As described above, the low-refractive index layer may be typically formed through application or printing. With such configuration, the low-refractive index layer can be continuously arranged by a roll-to-roll process. The low-refractive index layer may be formed on the entire surface of the substrate, or may be formed in a predetermined pattern. When the low-refractive index layer is formed in the predetermined pattern, the application is performed through, for example, a mask having the predetermined pattern. Any appropriate system may be adopted for the printing. Specifically, a printing method may be a plate printing method, such as gravure printing, offset printing, or flexographic printing, or may be a plateless printing method, such as inkjet printing, laser printing, or electrostatic printing.

An example of a specific configuration of the low-refractive index layer is described below. The low-refractive index layer of this embodiment is formed of one or a plurality of kinds of constituent units each forming a fine pore structure, and the constituent units are chemically bonded to each other through a catalytic action. Examples of the shape of each of the constituent units include a particle shape, a fiber shape, a rod shape, and a flat plate shape. The constituent units may have only one shape, or may have two or more shapes in combination. In the following description, a case in which the low-refractive index layer is a pore layer of a porous body in which microporous particles are chemically bonded to each other is mainly described.

Such pore layer may be formed by, for example, chemically bonding the microporous particles to each other in a pore layer-forming step. In the embodiment of the present invention, the shapes of the "particles" (e.g., the microporous particles) are not particularly limited. For example, the shapes may each be a spherical shape, or may each be any other shape. In addition, in the embodiment of the present invention, the microporous particles may be, for example, sol-gel beaded particles, nanoparticles (hollow nanosilica nanoballoon particles), or nanofibers. The microporous particles each typically contain an inorganic substance. Specific examples of the inorganic substance include silicon (Si), magnesium (Mg), aluminum (Al), titanium (Ti), zinc (Zn), and zirconium (Zr). Those inorganic substances may be used alone or in combination thereof. In one embodiment, the microporous particles are, for example, microporous particles of a silicon compound, and the porous body is, for example, a silicone porous body. The microporous particles of the silicon compound each contain, for example, a pulverized body of a gel-like silica compound. In addition, another form of the low-refractive index layer having the porous layer and/or the air layer in at least part thereof is, for example, a pore layer having the following features: the layer is formed of fibrous substances, such as nanofibers; and the fibrous substances are entangled with each other to form pores, thereby forming the layer. A method of producing such pore layer is not particularly limited, and is the same as that in the case of, for example, the pore layer of the porous body in which the microporous particles are chemically bonded to each other. Still another form thereof is, for example, a pore layer using hollow nanoparticles or nanoclay, or a pore layer formed by using hollow nanoballoons or magnesium fluoride. The pore layer may be a pore layer formed of a single constituent substance, or may be a pore layer formed of a plurality of constituent substances. The pore layer may include any one of the above-mentioned forms, or may include two or more of the above-mentioned forms.

In this embodiment, the porous structure of the porous body may be, for example, an open-cell structural body in which hole structures are continuous with each other. The open-cell structural body means, for example, that the hole structures are three-dimensionally continuous with each other in the silicone porous body, and can be said to be a state in which the internal pores of the hole structures are continuous with each other. When the porous body has an open-cell structure, its porosity can be increased. However, when closed-cell particles (particles each individually having a hole structure), such as hollow silica, are used, an open-cell structure cannot be formed. Meanwhile, for example, when silica sol particles (pulverized products of a gel-like silicon compound that forms sol) are used, the particles each have a three-dimensional dendritic structure, and hence the dendritic particles are sedimented and deposited in a coating film (coating film of the sol containing the pulverized products of the gel-like silicon compound). Accordingly, an open-cell structure can be easily formed. The low-refractive index layer more preferably has a monolith structure in which an open-cell structure includes a plurality of pore size distributions. The monolith structure means, for example, a hierarchical structure including a structure in which nanosized fine pores are present and an open-cell structure in which the nanosized pores assemble. When the monolith structure is formed, both of film strength and a high porosity may be achieved by, for example, imparting the high porosity to the layer through the use of a coarse open-cell pore while imparting the film strength thereto through the use of a fine pore. Such monolith structure may be preferably formed by controlling the pore size distribution of a pore structure to be produced in the gel (gel-like silicon compound) at a stage before its pulverization into the silica sol particles. In addition, the monolith structure may be formed by, for example, controlling the particle size distribution of the silica sol particles after the pulverization to a desired size at the time of the pulverization of the gel-like silicon compound.

The low-refractive index layer contains, for example, the pulverized products of a gel-like compound as described

above, and the pulverized products are chemically bonded to each other. The form of the chemical bond (chemical bonding) between the pulverized products in the low-refractive index layer is not particularly limited, and examples thereof include a cross-linking bond, a covalent bond, and a hydrogen bond.

The gel form of the gel-like compound is not particularly limited. The term "gel" generally refers to a state in which the mixture of a solvent and a solute is solidified because the solute loses its independent mobility owing to an interaction between its molecules to have a structure in which the molecules assemble. For example, the gel-like compound may be wet gel or may be xerogel. In general, the wet gel refers to gel which contains a dispersion medium and in which a solute has a uniform structure in the dispersion medium, and the xerogel refers to gel from which a solvent is removed, and in which a solute has a network structure having pores.

The gel-like compound is, for example, a gelled product obtained by causing a monomer compound to gel. The gel-like silicon compound is specifically, for example, a gelled product in which the molecules of a monomer silicon compound are bonded to each other, and the gelled product is specifically, for example, a gelled product in which the molecules of the monomer silicon compound are bonded to each other by a covalent bond, a hydrogen bond, or an intermolecular force. The covalent bond is, for example, a bond formed by dehydration condensation.

The volume-average particle diameter of the pulverized products in the low-refractive index layer is, for example, 0.10 um or more, preferably 0.20 um or more, more preferably 0.40 um or more. Meanwhile, the volume-average particle diameter is, for example, 2.00 um or less, preferably 1.50 um or less, more preferably 1.00 um or less. The range of the volume-average particle diameter is, for example, from 0.10 um to 2.00 um, preferably from 0.20 um to 1.50 um, more preferably from 0.40 um to 1.00 um. The particle size distribution of the pulverized products may be measured with, for example, a particle size distribution-evaluating apparatus based on a dynamic light scattering method, a laser diffraction method, or the like, and an electron microscope, such as a scanning electron microscope (SEM) or a transmission electron microscope (TEM). The volume-average particle diameter is an indicator of a variation in particle size of the pulverized products.

The kind of the gel-like compound is not particularly limited. The gel-like compound is, for example, a gel-like silicon compound. A case in which the gel-like compound is the gel-like silicon compound is described below as an example, but the present invention is not limited thereto.

The above-mentioned cross-linking bond is, for example, a siloxane bond. Examples of the siloxane bond include such a bond T2, a bond T3, and a bond T4 as represented below. When the porous layer (low-refractive index layer) has a siloxane bond, the layer may have any one of the bonds, may have any two of the bonds, or may have all the three of the bonds. As the ratios the T2 and the T3 out of the siloxane bonds become larger, the gel-like compound is richer in flexibility, and hence a characteristic inherent in gel can be expected. Meanwhile, as the ratio of the T4 becomes larger, the film strength of the layer is more easily expressed. Therefore, the ratios of the T2, the T3, and the T4 are preferably changed in accordance with, for example, a purpose, an application, and a desired characteristic.

T2

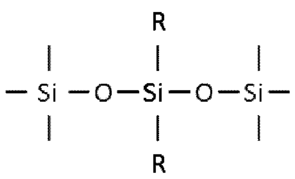

T3

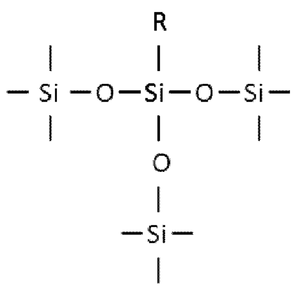

T4

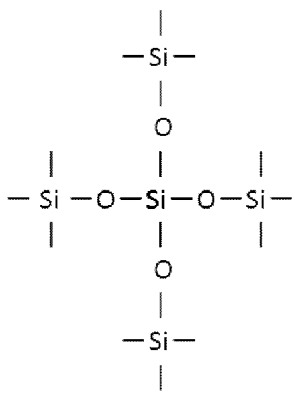

In addition, for example, silicon atoms in the low-refractive index layer (porous layer) are preferably bonded to each other by a siloxane bond. As a specific example, the ratio of unbonded silicon atoms (i.e., residual silanol) out of all the silicon atoms in the porous layer is, for example, less than 50%, preferably 30% or less, more preferably 15% or less.

When the gel-like compound is the gel-like silicon compound, its monomer silicon compound is not particularly limited. The monomer silicon compound is, for example, a compound represented by the below-indicated formula (1). When the gel-like silicon compound is a gelled product in which the molecules of the monomer silicon compound are bonded to each other by a hydrogen bond or an intermolecular force as described above, the molecules of the monomer represented by the formula (1) may be hydrogen-bonded to each other through, for example, their respective hydroxy

groups.

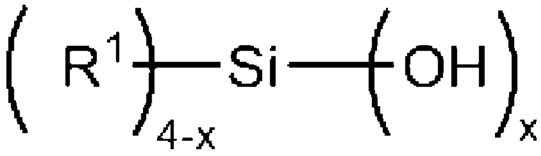

· · · (1)

In the formula (1), X represents, for example, 2, 3, or 4, preferably 3 or 4, $R^1$ represents, for example, a linear or branched alkyl group, and the number of carbon atoms of $R^1$ is, for example, from 1 to 6, preferably from 1 to 4, more preferably 1 or 2. Examples of the linear alkyl group include a methyl group, an ethyl group, a propyl group, a butyl group, a pentyl group, and a hexyl group, and examples of the branched alkyl group include an isopropyl group and an isobutyl group.

The silicon compound represented by the formula (1) is specifically, for example, a compound represented by the below-indicated formula (1') in which X represents 3. In the below-indicated formula (1'), $R^1$ is the same as that in the case of the formula (1), and represents, for example, a methyl group. When $R^1$ represents a methyl group, the silicon compound is tris(hydroxy)methylsilane. When X represents 3, the silicon compound is, for example, a trifunctional silane having three functional groups.

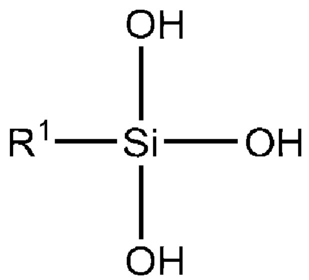

· · · (1')

Another specific example of the silicon compound represented by the formula (1) is a compound in which X represents 4. In this case, the silicon compound is, for example, a tetrafunctional silane having four functional groups.

The monomer silicon compound may be, for example, a hydrolysate of a silicon compound precursor. The silicon compound precursor only needs to be, for example, a precursor capable of producing the silicon compound through hydrolysis, and is specifically, for example, a compound represented by the below-indicated formula (2).

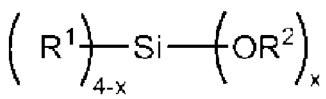

· · · (2)

In the formula (2), X represents, for example, 2, 3, or 4,

$R^1$ and $R^2$ each independently represent a linear or branched alkyl group,
$R^1$ and $R^2$ may be identical to or different from each other,
when X represents 2, $R^1$s may be identical to or different from each other, and
$R^2$s may be identical to or different from each other.

X and $R^1$ are the same as, for example, X and $R^1$ in the formula (1). The examples of $R^1$ in the formula (1) may be incorporated as examples of $R^2$.

The silicon compound precursor represented by the formula (2) is specifically, for example, a compound represented by the below-indicated formula (2') in which X represents 3. In the below-indicated formula (2'), $R^1$ and $R^2$ are the same as those in the case of the formula (2). When $R^1$ and $R^2$ each represent a methyl group, the silicon compound precursor is trimethoxy(methyl)silane (hereinafter sometimes referred to as "MTMS").

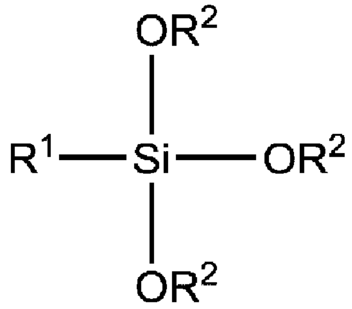

· · · (2')

The monomer silicon compound is preferably a trifunctional silane because of, for example, its excellent low refractive index characteristic. Meanwhile, the monomer silicon compound is preferably a tetrafunctional silane because of, for example, its excellent strength (e.g., scratch resistance). The monomer silicon compounds may be used alone or in combination thereof. For example, the low-refractive index layer may contain only the trifunctional silane as the monomer silicon compound, may contain only the tetrafunctional silane as such compound, may contain both of the trifunctional silane and the tetrafunctional silane as such compounds, or may further contain any other silicon compound as such compound. When two or more silicon compounds are used as the monomer silicon compounds, their ratios are not particularly limited, and may be appropriately set.

An example of a method of forming such low-refractive index layer is described below.

The method typically includes a precursor-forming step of forming a porous structure that is a precursor of the low-refractive index layer (porous layer) on a resin film, and a cross-linking reaction step of causing a cross-linking reaction inside the precursor after the precursor-forming step. The method further includes a containing liquid-producing step of producing a containing liquid containing microporous particles (hereinafter sometimes referred to as "microporous particle-containing liquid" or simply "containing liquid"), and a drying step of drying the containing liquid, and in the precursor-forming step, the microporous particles in the dried body are chemically bonded to each other to form the precursor. The containing liquid is not particularly limited, and is, for example, a suspension containing the microporous particles. In the following description, a case in which the microporous particles are the pulverized products of the gel-like compound, and the porous layer is a porous body (preferably a silicone porous body) containing the pulverized products of the gel-like compound is mainly described. However, the low-refractive index layer may be similarly formed even in the case where the microporous particles are those other than the pulverized products of the gel-like compound.

According to the method, for example, a low-refractive index layer (porous layer) having an extremely low refractive index is formed. A reason therefor is assumed to be, for example, as described below. However, the assumption does not limit the present invention and the method of forming the low-refractive index layer.

The pulverized products are obtained by pulverizing the gel-like silicon compound, and hence the three-dimensional structure of the gel-like silicon compound before the pulverization is brought into a state of being dispersed into three-dimensional basic structures. Further, in the above-mentioned method, the crushed products of the gel-like silicon compound are applied onto the resin film to form a precursor of a porous structure based on the three-dimensional basic structures. In other words, according to the method, new porous structures (three-dimensional basic structures) as a result of the application of the pulverized products, which are different from the three-dimensional structure of the gel-like silicon compound, are formed. Accordingly, in the porous layer to be finally obtained, for example, such a low refractive index that the layer functions to the same extent as an air layer does can be achieved. Further, in the method, the pulverized products are chemically bonded to each other, and hence the three-dimensional basic structures are fixed. Accordingly, the porous layer to be finally obtained can maintain sufficient strength and sufficient flexibility despite the fact that the layer is a structure having pores.

Further, in the above-mentioned method, the precursor-forming step and the cross-linking reaction step are performed as separate steps. In addition, the cross-linking reaction step is preferably performed in a plurality of stages. In the case where the cross-linking reaction step is performed in a plurality of stages, the strength of the precursor is further improved as compared to, for example, that in the case where the cross-linking reaction step is performed in one stage, and hence a low-refractive index layer achieving both of a high porosity and strength can be obtained. Although a mechanism for the foregoing is unclear, the mechanism is assumed to be, for example, as described below. That is, as described above, when the film strength of the porous layer is improved with a catalyst or the like simultaneously with the formation of the porous layer, there is a problem in that the porosity thereof reduces, though the film strength is improved by the advance of a catalytic reaction. This is probably because of, for example, the following reason: a cross-linking reaction between the microporous particles is advanced by the catalyst to increase the number of cross-linkages (chemical bonds) between the microporous particles, and hence a bond between the particles is strengthened, but the entirety of the porous layer condenses to reduce the porosity. In contrast, when the precursor-forming step and

the cross-linking reaction step are performed as separate steps, and the cross-linking reaction step is performed in a plurality of stages, for example, the following is conceivable: the number of the cross-linkages (chemical bonds) can be increased while the form of the entirety of the precursor is not changed to a very large extent (e.g., the condensation of the entirety thereof is not caused to a very large extent). However, the foregoing is an example of an assumable mechanism, and hence does not limit the method of forming the low-refractive index layer.

In the precursor-forming step, for example, particles each having a certain shape are laminated to form the precursor of the porous layer. The strength of the precursor at the time point is extremely weak. After that, a product capable of chemically bonding the microporous particles to each other (e.g., a strong base catalyst generated from a photobase generator) is generated by, for example, a photoactive or thermally active catalytic reaction (first stage of the cross-linking reaction step). When heat aging (second stage of the cross-linking reaction step) is further performed for advancing the reaction efficiently and in a short time period, the chemical bonding (cross-linking reaction) between the microporous particles may further advance to improve the strength. For example, when the microporous particles are the microporous particles of a silicon compound (e.g., the pulverized bodies of a gel-like silica compound), and residual silanol groups (Si-OH groups) are present in the precursor, the residual silanol groups may be chemically bonded to each other by a cross-linking reaction therebetween. However, the description is also merely an example, and hence does not limit the method of forming the low-refractive index layer.

The above-mentioned method includes the containing liquid-producing step of producing the containing liquid containing the microporous particles. When the microporous particles are the pulverized products of the gel-like compound, the pulverized products are obtained by, for example, pulverizing the gel-like compound. As described above, the pulverization of the gel-like compound breaks the three-dimensional structure of the gel-like compound to disperse the structure into the three-dimensional basic structures. An example of the preparation of the pulverized products is as described below.

The gelation of the monomer compound may be performed by, for example, bonding the molecules of the monomer compound to each other through the use of a hydrogen bond or an intermolecular force. The monomer compound is, for example, a silicon compound represented by the formula (1). The silicon compound represented by the formula (1) has a hydroxy group, and hence the molecules of the monomer represented by the formula (1) may be bonded to each other by a hydrogen bond or an intermolecular force through, for example, their respective hydroxy groups.

Alternatively, the silicon compound may be the hydrolysate of the silicon compound precursor described above, and may be produced by, for example, hydrolyzing a silicon compound precursor represented by the formula (2).

A method of hydrolyzing the silicon compound precursor is not particularly limited, and the hydrolysis may be performed by, for example, a chemical reaction in the presence of a catalyst. Examples of the catalyst include acids such as oxalic acid and acetic acid. The hydrolysis reaction may be performed by, for example, slowly dropping and mixing an aqueous solution of oxalic acid into a mixed liquid (e.g., a suspension) of the silicon compound and dimethyl sulfoxide under a room-temperature environment, and then stirring the mixture for about 30 minutes without treating the mixture. At the time of the hydrolysis of the silicon compound precursor, for example, when the alkoxy groups of the silicon compound precursor are completely hydrolyzed, the gelation after the hydrolysis, aging, heating after the formation of the porous structure, and fixation may be more efficiently performed.

The gelation of the monomer compound may be performed by, for example, a dehydration condensation reaction between the molecules of the monomer. The dehydration condensation reaction is preferably performed in the presence of, for example, a catalyst, and examples of the catalyst include dehydration condensation catalysts including: acid catalysts, such as hydrochloric acid, oxalic acid, and sulfuric acid; and base catalysts, such as ammonia, potassium hydroxide, sodium hydroxide, and ammonium hydroxide. Of those dehydration condensation catalysts, a base catalyst is preferred. In the dehydration condensation reaction, the addition amount of the catalyst with respect to the monomer compound is not particularly limited. The catalyst may be added in an amount of, for example, preferably from 0.05 mol to 10 mol, more preferably from 0.1 mol to 7 mol, still more preferably from 0.1 mol to 5 mol with respect to 1 mol of the monomer compound.

The gelation of the monomer compound is preferably performed in, for example, a solvent. The ratio of the monomer compound to the solvent is not particularly limited. Examples of the solvent include dimethyl sulfoxide (DMSO), N-methylpyrrolidone (NMP), N,N-dimethylacetamide (DMAc), dimethylformamide (DMF), $\gamma$-butyrolactone (GBL), acetonitrile (MeCN), and ethylene glycol ethyl ether (EGEE) . The solvents may be used alone or in combination thereof. The solvent to be used in the gelation is hereinafter sometimes referred to as "solvent for gelation".

Conditions for the gelation are not particularly limited. The temperature at which the solvent containing the monomer compound is treated is, for example, from 20°C to 30°C, preferably from 22°C to 28°C, more preferably from 24°C to 26°C. The time period of the treatment is, for example, from 1 minute to 60 minutes, preferably from 5 minutes to 40 minutes, more preferably from 10 minutes to 30 minutes. When the dehydration condensation reaction is performed, treatment conditions therefor are not particularly limited, and those examples may be incorporated. When the gelation is performed, for example, a siloxane bond grows to form silica primary particles, and as the reaction further advances, the primary particles are strung together like beads to produce gel having a three-dimensional structure.

The gel-like compound obtained by the gelation is preferably subjected to an aging treatment after the gelation reaction. The aging treatment may further grow, for example, the primary particles of the gel having a three-dimensional structure obtained by the gelation to increase the sizes of the particles themselves. As a result, the contact state of a neck portion where the particles are in contact with each other can be changed from point contact to surface contact (the area of contact therebetween can be increased). The gel that has been subjected to the aging treatment is improved in, for example, strength of the gel itself, and as a result, the strength of each of the three-dimensional basic structures after the performance of the pulverization can be improved. Thus, in, for example, the drying step after the application of the pulverized products, the shrinkage of the pore size of the porous structure obtained by the deposition of the three-dimensional basic structures along with the volatilization of the solvent of the application liquid in the drying process can be suppressed.

The aging treatment may be performed by, for example, incubating the gel-like compound at a predetermined temperature for a predetermined time period. The aging temperature is, for example, 30°C or more, preferably 35°C or more, more preferably 40°C or more. Meanwhile, the aging temperature is, for example, 80°C or less, preferably 75°C or less, more preferably 70°C or less. The range of the aging temperature is, for example, from 30°C to 80°C, preferably from 35°C to 75°C, more preferably from 40°C to 70°C. The aging time is, for example, 5 hours or more, preferably 10 hours or more, more preferably 15 hours or more. Meanwhile, the aging time is, for example, 50 hours or less, preferably 40 hours or less, more preferably 30 hours or less. The range of the aging time is, for example, from 5 hours to 50 hours, preferably from 10 hours to 40 hours, more preferably from 15 hours to 30 hours. The aging conditions may be optimized so that, for example, increases in sizes of the silica primary particles and an increase in contact area of the neck portion may be achieved. Further, the boiling point of a solvent that has been used in the treatment is preferably considered. For example, when the aging temperature is excessively high, the solvent may excessively volatilize to cause an inconvenience such as the closing of the fine pores of the three-dimensional porous structure due to the condensation of the concentration of the application liquid (gel liquid). Meanwhile, for example, when the aging temperature is excessively low, an effect exhibited by the aging is not sufficiently obtained. Moreover, a variation in temperature with time in a mass-production process for the low-refractive index layer increases, and hence a low-refractive index layer poor in characteristics may be formed.

For example, the same solvent as that of the gelation treatment may be used in the aging treatment. Specifically, the reaction product after the gelation treatment (i.e., the solvent containing the gel-like compound) is preferably subjected as it is to the aging treatment. The number of moles of residual silanol groups in the gel (the gel-like compound, for example, the gel-like silicon compound) that has finished being subjected to the aging treatment after the gelation is, for example, 50% or less, preferably 40% or less, more preferably 30% or less. Meanwhile, the number of moles of the residual silanol groups is, for example, 1% or more, preferably 3% or more, more preferably 5% or more. The range of the number of moles of the residual silanol groups is, for example, from 1% to 50%, preferably from 3% to 40%, more preferably from 5% to 30%. To improve the hardness of the gel, for example, the number of moles of the residual silanol groups is preferably as small as possible. When the number of moles of the silanol groups is excessively large, for example, it may become impossible to retain the porous structure by the time when the precursor of the silicone porous body is cross-linked. Meanwhile, when the number of moles of the silanol groups is excessively small, there is a risk in that in, for example, the step of producing the microporous particle-containing liquid (e.g., a suspension) and/or any subsequent step, the pulverized products of the gel-like compound cannot be cross-linked, and hence sufficient film strength cannot be imparted to the low-refractive index layer. The number of moles of the residual silanol groups is, for example, the ratio of the residual silanol groups when the number of moles of the alkoxy groups of the raw material for the layer (e.g., the monomer compound precursor) is set to 100. The foregoing is an example of a case in which silanol groups remain, but for example, when the monomer silicon compound is modified with various reactive functional groups, the same matters, conditions, and the like as those described above may also be applied to the respective functional groups.

After the gelation of the monomer compound in the solvent for gelation, the resultant gel-like compound is pulverized. With regard to the pulverization, for example, the gel-like compound in the solvent for gelation may be subjected as it is to the pulverization treatment, or the following may be performed: the solvent for gelation is replaced with any other solvent, and then the gel-like compound in the other solvent is subjected to the pulverization treatment. In addition, for example, when the catalyst and the solvent that have been used in the gelation reaction remain even after the aging step to cause the gelation (pot life) of the liquid with time and a reduction in drying efficiency at the time of the drying step, the solvent for gelation is preferably replaced with the other solvent. The other solvent is hereinafter sometimes referred to as "solvent for pulverization".

The solvent for pulverization is not particularly limited, and for example, an organic solvent may be used. The organic solvent is, for example, a solvent having a boiling point of 130°C or less, preferably 100°C or less, more preferably 85°C or less. Specific examples thereof include isopropyl alcohol (IPA), ethanol, methanol, butanol, propylene glycol monomethyl ether (PGME), methyl cellosolve, acetone, dimethylformamide (DMF), and isobutyl alcohol. The solvents for pulverization may be used alone or in combination thereof.

The combination of the solvent for gelation and the solvent for pulverization is not particularly limited, and examples thereof include: a combination of DMSO and IPA; a combination of DMSO and ethanol; a combination of DMSO and methanol; a combination of DMSO and butanol; and a combination of DMSO and isobutyl alcohol. When the solvent for gelation is replaced with the solvent for pulverization as described above, in, for example, coating film formation to be described later, a more uniform coating film may be formed.

A method of pulverizing the gel-like compound is not particularly limited, and the pulverization may be performed with, for example, an ultrasonic homogenizer, a high-speed rotation homogenizer, or any other pulverizing apparatus using a cavitation phenomenon. While an apparatus configured to perform media pulverization, such as a ball mill, physically breaks, for example, the porous structure of the gel at the time of the pulverization, a cavitation-type pulverizing apparatus, such as a homogenizer, is of, for example, a media-less system, and hence peels off a bonding surface between silica particles relatively weakly bonded to each other, the particles having already been included in the three-dimensional structure of the gel, with a high-speed shear force. Thus, the gel three-dimensional structure to be obtained may retain, for example, a porous structure having a particle size distribution in a certain range, and hence the porous structure obtained by the deposition at the time of the application and drying of the application liquid may be formed again. Conditions for the pulverization are not particularly limited, and for example, it is preferred that a high-speed flow be instantaneously applied to the liquid to enable the pulverization of the gel without the volatilization of the solvent of the liquid. For example, the gel is preferably pulverized into pulverized products having such a particle size variation (e.g., a volume-average particle diameter or a particle size distribution) as described above. If the amount of work done to the gel, such as a pulverization time or strength, is insufficient, for example, there is a risk in that coarse particles remain to preclude the formation of dense fine pores, and moreover, the number of appearance defects increases to make it impossible to obtain high quality. Meanwhile, when the amount of the work is excessively large, for example, there is a risk in that particles finer than the desired particle size distribution are obtained, and hence the sizes of the pores deposited after the application and the drying become finer to make it impossible to obtain a desired porosity.

As described above, a liquid (e.g., a suspension) containing the microporous particles (pulverized products of the gel-like compound) may be produced. Further, the addition of a catalyst that chemically bonds the microporous particles to each other after the production of the liquid containing the microporous particles or during the production step enables the production of a containing liquid containing the microporous particles and the catalyst. The catalyst may be, for example, a catalyst that accelerates a cross-linking bond between the microporous particles. A dehydration condensation reaction between residual silanol groups in silica sol molecules is preferably utilized as a chemical reaction for chemically bonding the microporous particles to each other. When the reaction between the hydroxy groups of the silanol groups is accelerated with the catalyst, continuous film formation in which the porous structure is cured in a short time period becomes possible. Examples of the catalyst include a photoactive catalyst and a thermally active catalyst. The photoactive catalyst enables a chemical bond (e.g., a cross-linking bond) between the microporous particles without reliance on heating in, for example, the precursor-forming step. According to the foregoing, in, for example, the precursor-forming step, the shrinkage of the entirety of the precursor hardly occurs, and hence a higher porosity can be maintained. In addition, a substance that generates a catalyst (catalyst generator) may be used in addition to the catalyst or instead thereof. For example, a substance that generates a catalyst with light (photocatalyst generator) may be used in addition to the photoactive catalyst or instead thereof, or a substance that generates a catalyst with heat (thermal catalyst generator) may be used in addition to the thermally active catalyst or instead thereof. Examples of the photocatalyst generator include a photobase generator (substance that generates a basic catalyst through light irradiation) and a photoacid generator (substance that generates an acidic catalyst through light irradiation). Of those, a photobase generator is preferred. Examples of the photobase generator include 9-anthrylmethyl N,N-diethylcarbamate (product name: WPBG-018), (E)-1-[3-(2-hydroxyphenyl)-2-propenoyl]piperidine (product name: WPBG-027), 1-(anthraquinon-2-yl)ethyl imidazolecarboxylate (product name: WPBG-140), 2-nitrophenylmethyl 4-methacryloyloxypiperidine-1-carboxylate (product name: WPBG-165), 1,2-diisopropyl-3-[bis(dimethylamino)methylene]guanidium 2-(3-benzoylphenyl)propionate (product name: WPBG-266), 1,2-dicyclohexyl-4,4,5,5-tetramethylbiguanidium n-butyltriphenyl borate (product name: WPBG-300), 2-(9-oxoxanthen-2-yl)propionic acid 1,5,7-triazabicyclo[4.4.0]dec-5-ene (Tokyo Chemical Industry Co., Ltd.), and a compound containing 4-piperidine methanol (product name: HDPD-PB100: manufactured by Heraeus). Each product name including the "WPBG" is a product name of Wako Pure Chemical Industries, Ltd. Examples of the photoacid generator include an aromatic sulfonium salt (product name: SP-170: ADEKA Corporation), a triaryl sulfonium salt (product name: CPI101A: San-Apro Ltd.), and an aromatic iodonium salt (product name: Irgacure 250: Ciba Japan). In addition, the catalyst that chemically bonds the microporous particles to each other is not limited to the photoactive catalyst and the photocatalyst generator, and may be, for example, the thermally active catalyst or the thermal catalyst generator, such as urea. Examples of the catalyst that chemically bonds the microporous particles to each other include: base catalysts, such as potassium hydroxide, sodium hydroxide, and ammonium hydroxide; and acid catalysts, such as hydrochloric acid, acetic acid, and oxalic acid. Of those, a base catalyst is preferred. The catalyst or catalyst generator that chemically bonds the microporous particles to each other may be used, for example, as follows: the catalyst or the catalyst generator is used by being added to a sol particle liquid (e.g., a suspension) containing the pulverized products

(microporous particles) immediately before the application of the liquid; or the catalyst or the catalyst generator is used as a mixed liquid obtained by mixing the catalyst or the catalyst generator in a solvent. The mixed liquid may be, for example, an application liquid obtained by directly adding and dissolving the catalyst or the catalyst generator in the sol particle liquid, a solution obtained by dissolving the catalyst or the catalyst generator in the solvent, or a dispersion obtained by dispersing the catalyst or the catalyst generator in the solvent. The solvent is not particularly limited, and examples thereof include water and a buffer solution.

Next, the containing liquid (e.g., a suspension) containing the microporous particles is applied onto the substrate (applying step). For example, various application systems to be described later may each be used in the application, and a system for the application is not limited thereto. Direct application of the containing liquid containing the microporous particles (e.g., the pulverized products of the gel-like silica compound) onto the substrate may form a coating film containing the microporous particles and the catalyst. The coating film may be referred to as, for example, "coating layer". When the coating film is formed, for example, the pulverized products whose three-dimensional structures have been broken are sedimented and deposited to build a new three-dimensional structure. For example, the containing liquid containing the microporous particles may be free of the catalyst that chemically bonds the microporous particles to each other. For example, as described later, the precursor-forming step may be performed after the catalyst that chemically bonds the microporous particles to each other has been blown onto the coating film, or while the catalyst is blown onto the film. However, the containing liquid containing the microporous particles may contain the catalyst that chemically bonds the microporous particles to each other, and the microporous particles may be chemically bonded to each other through the action of the catalyst in the coating film to form the precursor of the porous body.

The above-mentioned solvent (hereinafter sometimes referred to as "solvent for application") is not particularly limited, and for example, an organic solvent may be used. The organic solvent is, for example, a solvent having a boiling point of 150°C or less. Specific examples thereof include IPA, ethanol, methanol, n-butanol, 2-butanol, isobutyl alcohol, and pentanol. In addition, the same solvent as the solvent for pulverization may be used. When the method of forming the low-refractive index layer includes the step of pulverizing the gel-like compound, for example, the solvent for pulverization containing the pulverized products of the gel-like compound may be used as it is in the step of forming the coating film.

In the applying step, for example, sol-like pulverized products dispersed in the solvent (hereinafter sometimes referred to as "sol particle liquid") are preferably applied onto the substrate. When the sol particle liquid is subjected to, for example, the chemical cross-linking after its application onto the substrate and its drying, a porous layer having a certain level or more of film strength may be continuously formed. The term "sol" as used in the embodiment of the present invention refers to the following state: when the three-dimensional structure of the gel is pulverized, silica sol particles of nano three-dimensional structures retaining part of the porous structure are dispersed in the solvent to show fluidity.

The concentration of the pulverized products in the solvent for application is not particularly limited, and is, for example, from 0.3% (v/v) to 50% (v/v), preferably from 0.5% (v/v) to 30% (v/v), more preferably from 1.00 (v/v) to 10% (v/v). When the concentration of the pulverized products is excessively high, for example, the fluidity of the sol particle liquid may remarkably reduce to cause an aggregate or an application stripe at the time of its application. When the concentration of the pulverized products is excessively low, for example, there is a risk in that a considerable time period is required for the drying of the solvent of the sol particle liquid, and moreover, the concentration of the residual solvent immediately after the drying increases, and hence the porosity of the low-refractive index layer reduces.

The physical properties of the sol are not particularly limited. The sol has a shear viscosity of, for example, 100 cPa·s or less, preferably 10 cPa·s or less, more preferably 1 cPa·s or less at a shear rate of 1,000 1/s. When the shear viscosity is excessively high, for example, an application stripe may occur to cause an inconvenience such as a reduction in transfer ratio of gravure coating. In contrast, when the shear viscosity is excessively low, for example, there is a risk in that the wet application thickness of the sol at the time of its application cannot be increased, and hence a desired thickness is not obtained after its drying.

The amount of the pulverized products to be applied to the substrate is not particularly limited, and may be appropriately set in accordance with, for example, a desired thickness of the silicone porous body (consequently, the low-refractive index layer) . As a specific example, when a silicone porous body having a thickness of from 0.1 um to 1,000 um is formed, the amount of the pulverized products to be applied to the substrate is, for example, from 0.01 μg to 60, 000 μg, preferably from 0.1 μg to 5, 000 μg, more preferably from 1 ug to 50 μg per 1 $m^2$ of the area of the substrate. It is difficult to uniquely define a preferred application amount of the sol particle liquid because the amount is related to, for example, the concentration and application system of the liquid. However, the liquid is preferably applied so as to be as thin a layer as possible in consideration of productivity. When the application amount is excessively large, for example, the liquid is more likely to be dried in a drying furnace before its solvent volatilizes. Thus, before the nano-pulverized sol particles are sedimented and deposited in the solvent to form the pore structure, the solvent may be dried to inhibit the formation of the pores, thereby largely reducing the porosity of the low-refractive index layer. Meanwhile, when the application amount is excessively small, the following risk may be higher: application repelling occurs owing

to, for example, the unevenness of the substrate, or a variation in hydrophilicity or hydrophobicity thereof.

Further, the method of forming the low-refractive index layer includes, for example, the precursor-forming step of forming the pore structure that is the precursor of the pore layer (low-refractive index layer) on the substrate as described above. Although the precursor-forming step is not particularly limited, the precursor (pore layer) may be formed by, for example, the drying step of drying a coating film produced by applying the microporous particle-containing liquid. Through a drying treatment in the drying step, for example, the solvent in the coating film (solvent in the sol particle liquid) is removed. In addition, the sol particles can be sedimented and deposited to form the pore structure during the drying treatment. The temperature of the drying treatment is, for example, from 50°C to 250°C, preferably from 60°C to 150°C, more preferably from 70°C to 130°C. The time period of the drying treatment is, for example, from 0.1 minute to 30 minutes, preferably from 0.2 minute to 10 minutes, more preferably from 0.3 minute to 3 minutes. The temperature and time period of the drying treatment are preferably lower and shorter in relation to, for example, continuous productivity and the expression of a high porosity. When the conditions are excessively severe, in, for example, the case where the liquid is applied to the resin film, there is a risk in that the temperature approaches the glass transition temperature of the resin film to elongate the resin film in a drying furnace, and hence a defect such as a crack occurs in the formed pore structure immediately after the application. Meanwhile, when the conditions are excessively mild, the precursor contains the residual solvent at, for example, the timing at which the precursor leaves the drying furnace, and hence an inconvenience in terms of appearance, such as the occurrence of a scratch flaw, may occur at the time of the rubbing of the precursor with a roll in the next step.

For example, the drying treatment may be natural drying, may be heat drying, or may be drying under reduced pressure. Of those, the heat drying is preferably used when continuous production of the precursor on an industrial scale is presupposed. A method for the heat drying is not particularly limited, and for example, general heating means may be used. Examples of the heating means include a hot-air dryer, a heating roll, and a far-infrared heater. In addition, a solvent having a low surface tension is preferred as the solvent to be used for the purpose of suppressing the occurrence of a shrinkage stress along with the volatilization of the solvent at the time of the drying and the cracking phenomenon of the porous layer (silicone porous body) due to the stress. Examples of the solvent include a lower alcohol typified by isopropyl alcohol (IPA), hexane, and perfluorohexane. In addition, a small amount of a perfluoro-based surfactant or a silicone-based surfactant may be added to IPA or the like described above to reduce its surface tension.

Further, as described above, the method of forming the low-refractive index layer includes the cross-linking reaction step of causing the cross-linking reaction inside the precursor after the precursor-forming step. The basic substance is generated by light irradiation or heating in the cross-linking reaction step, and the cross-linking reaction step is performed in a plurality of stages. At the first stage of the cross-linking reaction step, for example, the microporous particles are chemically bonded to each other through the action of the catalyst (basic substance). Thus, for example, the three-dimensional structures of the pulverized products in the coating film (precursor) are fixed. When the fixation is performed by conventional sintering, for example, a treatment at a temperature as high as 200°C or more is performed to induce the dehydration condensation of silanol groups and the formation of a siloxane bond. In the formation method, when any one of various additives that catalyze the dehydration condensation reaction is caused to react with the silanol groups, the porous structure may be continuously formed and fixed at a relatively low drying temperature around 100°C and in a treatment time period as short as less than several minutes without the occurrence of any damage to, for example, the substrate (resin film).

A method for the chemical bonding is not particularly limited, and may be appropriately determined in accordance with, for example, the kind of the gel-like silicon compound. As a specific example, the chemical bonding may be performed by, for example, a chemical cross-linking bond between the pulverized products. In addition to the foregoing, for example, when inorganic particles each formed of titanium oxide or the like are added to the pulverized products, it is conceivable that the inorganic particles and the pulverized products are chemically bonded to each other by a cross-linking bond. In addition, also when the pulverized products are caused to carry a biocatalyst, such as an enzyme, a site different from a catalytic active site of the catalyst and the pulverized products may be chemically bonded to each other by a cross-linking bond. Therefore, the development of the application of the method of forming the low-refractive index layer not only to, for example, the porous layer (silicone porous body) formed of the sol particles but also to an organic-inorganic hybrid porous layer, a host-guest porous layer, or the like is conceivable.

What stage in the method of forming the low-refractive index layer the chemical reaction in the presence of the catalyst is performed (occurs) at is not particularly limited, and the reaction is performed at, for example, at least one stage in the multi-stage cross-linking reaction step. For example, in the method of forming the low-refractive index layer, as described above, the drying step may also serve as the precursor-forming step. In addition, for example, the following may be performed: the multi-stage cross-linking reaction step is performed after the drying step, and the microporous particles are chemically bonded to each other through the action of the catalyst at at least one stage of the step. For example, when the catalyst is a photoactive catalyst as described above, in the cross-linking reaction step, the microporous particles may be chemically bonded to each other by light irradiation to form the precursor of the porous body. In addition, when the catalyst is a thermally active catalyst, in the cross-linking reaction step, the microporous particles

may be chemically bonded to each other by heating to form the precursor of the porous body.

The above-mentioned chemical reaction may be performed by, for example, subjecting the coating film containing the catalyst added to the sol particle liquid (e.g., a suspension) in advance to light irradiation or heating, subjecting the coating film to light irradiation or heating after blowing the catalyst onto the film, or subjecting the coating film to light irradiation or heating while blowing the catalyst onto the film. An integrated light quantity in the light irradiation is not particularly limited, and is, for example, from 200 $mJ/cm^2$ to 800 $mJ/cm^2$, preferably from 250 $mJ/cm^2$ to 600 $mJ/cm^2$, more preferably from 300 $mJ/cm^2$ to 400 $mJ/cm^2$ in terms of a wavelength of 360 nm. An integrated light quantity of 200 $mJ/cm^2$ or more is preferred from the viewpoint of preventing the following: the irradiance is not sufficient, and hence the decomposition of the catalyst by its light absorption does not advance, thereby resulting in an insufficient effect. In addition, an integrated light quantity of 800 $mJ/cm^2$ or less is preferred from the viewpoint of preventing the occurrence of a thermal wrinkle due to the application of damage to the substrate under the porous layer. Conditions for the heating treatment are not particularly limited. A heating temperature is, for example, from 50°C to 250°C, preferably from 60°C to 150°C, more preferably from 70°C to 130°C. A heating time is, for example, from 0.1 minute to 30 minutes, preferably from 0.2 minute to 10 minutes, more preferably from 0.3 minute to 3 minutes. Alternatively, the step of drying the sol particle liquid (e.g., a suspension) applied as described above may also serve as the step of performing the chemical reaction in the presence of the catalyst. That is, in the step of drying the applied sol particle liquid (e.g., a suspension), the pulverized products (microporous particles) may be chemically bonded to each other by the chemical reaction in the presence of the catalyst. In this case, the pulverized products (microporous particles) may be further strongly bonded to each other by further heating the coating film after the drying step. Further, it is assumed that the chemical reaction in the presence of the catalyst may occur even in each of the step of producing the microporous particle-containing liquid (e.g., a suspension) and the step of applying the microporous particle-containing liquid. However, the assumption does not limit the method of forming the low-refractive index layer. In addition, a solvent having a low surface tension is preferred as the solvent to be used for the purpose of, for example, suppressing the occurrence of a shrinkage stress along with the volatilization of the solvent at the time of the drying and the cracking phenomenon of the porous layer due to the stress. Examples thereof include a lower alcohol typified by isopropyl alcohol (IPA), hexane, and perfluorohexane.

In the method of forming the low-refractive index layer, the cross-linking reaction step is performed in a plurality of stages, and hence the strength of the porous layer (low-refractive index layer) can be further improved as compared to, for example, that in the case where the cross-linking reaction step is performed in one stage. A step corresponding to the second and subsequent stages of the cross-linking reaction step is hereinafter sometimes referred to as "aging step". In the aging step, the cross-linking reaction may be further accelerated inside the precursor by, for example, heating the precursor. Although a phenomenon occurring in the cross-linking reaction step and a mechanism therefor are unclear, the phenomenon and the mechanism are, for example, as described above. In, for example, the aging step, when a heating temperature is set to a low value to cause the cross-linking reaction while suppressing the shrinkage of the precursor, the strength is improved, and hence both of a high porosity and the strength can be achieved. The temperature in the aging step is, for example, from 40°C to 70°C, preferably from 45°C to 65°C, more preferably from 50°C to 60°C. The time period for which the aging step is performed is, for example, from 10 hr to 30 hr, preferably from 13 hr to 25 hr, more preferably from 15 hr to 20 hr.

The low-refractive index layer formed as described above is excellent in strength. Accordingly, the layer may be turned into, for example, a roll-shaped porous body, and hence provides such advantages as follows: the production efficiency of the layer is satisfactory; and the layer is easy to handle.

The low-refractive index layer (porous layer) thus formed may be turned into a laminated structural body including a porous structure by, for example, further laminating the layer together with any other film (layer) . In this case, the respective constituents in the laminated structural body may be laminated via, for example, a pressure-sensitive adhesive or an adhesive. The lamination of the respective constituents may be performed by, for example, a continuous treatment (e.g., a so-called roll-to-roll process) involving using an elongate film because of its efficiency, and when the substrate is a formed product, an element, or the like, the constituents may be subjected to a batch treatment before being laminated.

E-4. Pressure-sensitive Adhesive Layers

Any appropriate pressure-sensitive adhesive may be used as a pressure-sensitive adhesive for forming each of the pressure-sensitive adhesive layers. The pressure-sensitive adhesive is typically, for example, an acrylic pressure-sensitive adhesive (acrylic pressure-sensitive adhesive composition). The acrylic pressure-sensitive adhesive composition is well-known in the art, and hence its detailed description is omitted. The thickness of each of the pressure-sensitive adhesive layers is, for example, from 3 um to 200 um. The pressure-sensitive adhesive layers **43** and **44** may be identical to or different from each other in constituent material and thickness. When one of the pressure-sensitive adhesive layers is arranged so as to be adjacent to the low-refractive index layer, the pressure-sensitive adhesive layer typically has such hardness that under a normal state, the pressure-sensitive adhesive for forming the pressure-sensitive

adhesive layer does not permeate the pores of the low-refractive index layer. The storage modulus of elasticity of such pressure-sensitive adhesive layer may be, for example, from $1.3\times10^5$ (Pa) to $1.0\times10^7$ (Pa) .

## Examples

Now, the present invention is specifically described by way of Examples. However, the present invention is not limited to these Examples but is set out in the appended claims. Methods of measuring the respective characteristics are as described below.

### (I) Refractive Index of Low-refractive Index Layer of each of Low-refractive Index Reinforcing Portions

After a low-refractive index layer had been formed on an acrylic film, the resultant was cut into a size measuring 50 mm by 50 mm, and the piece was bonded to the front surface of a glass plate (thickness: 3 mm) via a pressure-sensitive adhesive layer. A central portion (having a diameter of about 20 mm) on the rear surface of the glass plate was daubed with a black marker pen. Thus, a sample in which light was not reflected on the rear surface of the glass plate was obtained. The sample was set in an ellipsometer (manufactured by J.A. Woollam Japan: VASE), and its refractive index was measured under the conditions of a wavelength of 500 nm and an incident angle of from 50° to 80°.

### (II) Brightness Unevenness

The brightness unevenness of each of optical laminates obtained in Examples and Comparative Examples was visually observed by causing the light of a LED to enter from an end portion of the light guide plate of the optical laminate. An evaluation was performed on the basis of the following criteria.

◦: Brightness (lightness) is uniform over the entire surface of the laminate.

×: Light leakage is observed, brightness is nonuniform, and/or a bright region is small.

### (III) Strength

The presence or absence of peeling between the light guide plate and a prism film at the time of the handling of each of the optical laminates obtained in Examples and Comparative Examples was examined. An evaluation was performed on the basis of the following criteria.

◦: No peeling occurred, and hence the laminate was able to be handled as an integrated product without any problem.

×: The peeling occurred.

### [Production Example 1] Preparation of Application Liquid for forming Low-refractive Index Layer

### (1) Gelation of Silicon Compound

0.95 g of methyltrimethoxysilane (MTMS) that was a precursor of a silicon compound was dissolved in 2.2 g of dimethyl sulfoxide (DMSO) . Thus, a mixed liquid A was prepared. 0.5 g of a 0.01 mol/L aqueous solution of oxalic acid was added to the mixed liquid A, and the mixture was stirred at room temperature for 30 minutes so that MTMS was hydrolyzed. Thus, a mixed liquid B containing tris(hydroxy)methylsilane was produced.

0.38 g of 28 wt% ammonia water and 0.2 g of pure water were added to 5.5 g of DMSO, and then the mixed liquid B was further added to the mixture, followed by stirring at room temperature for 15 minutes to perform the gelation of tris(hydroxy)methylsilane. Thus, a mixed liquid C containing a gel-like silicon compound was obtained.

### (2) Aging Treatment

An aging treatment was performed by incubating the mixed liquid C containing the gel-like silicon compound, which had been prepared as described above, as it was at 40°C for 20 hours.

### (3) Pulverization Treatment

Next, the gel-like silicon compound subjected to the aging treatment as described above was crushed into

granular shapes each having a size of from several millimeters to several centimeters with a spatula. Next, 40 g of isopropyl alcohol (IPA) was added to the mixed liquid C, and the mixture was lightly stirred. After that, the mixture was left at rest at room temperature for 6 hours so that the solvent and the catalyst in the gel were decanted. A similar decantation treatment was performed three times to replace the solvent with IPA. Thus, a mixed liquid D was obtained. Next, the gel-like silicon compound in the mixed liquid D was subjected to a pulverization treatment (high-pressure media-less pulverization). The pulverization treatment (high-pressure media-less pulverization) was performed as follows: a homogenizer (manufactured by SMT Co., Ltd., product name: "UH-50") was used, and 1.85 g of the gel-like silicon compound and 1.15 g of IPA in the mixed liquid D were weighed in a 5-cubic centimeter screw bottle, followed by the performance of the pulverization of the mixture under the conditions of 50 W and 20 kHz for 2 minutes.

The gel-like silicon compound in the mixed liquid D was pulverized by the pulverization treatment, and hence the mixed liquid D was turned into a sol liquid of the pulverized products. A volume-average particle diameter representing a variation in particle size of the pulverized products in the mixed liquid D was determined to be from 0.50 to 0.70 with a dynamic light scattering-type nanotrack particle size analyzer (manufactured by Nikkiso Co., Ltd., UPA-EX150). Further, a methyl ethyl ketone (MEK) solution of a photobase generator (Wako Pure Chemical Industries, Ltd.: product name: WPBG-266) having a concentration of 1.5 wt% and a MEK solution of bis (trimethoxysilyl) ethane having a concentration of 5% were added at ratios of 0.062 g and 0.036 g, respectively to 0.75 g of the sol liquid (mixed liquid D). Thus, an application liquid for forming a low-refractive index layer was obtained.

[Production Example 2]

Preparation of Pressure-sensitive Adhesive

90.7 Parts of butyl acrylate, 6 parts of N-acryloylmorpholine, 3 parts of acrylic acid, 0.3 part of 2-hydroxybutyl acrylate, and 0.1 part of 2,2'-azobisisobutyronitrile serving as a polymerization initiator were loaded into a four-necked flask including a stirring blade, a temperature gauge, a nitrogen gas-introducing tube, and a condenser together with 100 g of ethyl acetate, and a nitrogen gas was introduced to purge the flask with nitrogen while the mixture was gently stirred. After that, a liquid temperature in the flask was kept at around 55°C, and a polymerization reaction was performed for 8 hours to prepare an acrylic polymer solution. 0.2 Part of an isocyanate cross-linking agent (CORONATE L manufactured by Nippon Polyurethane Industry Co., Ltd., tolylene diisocyanate adduct of trimethylolpropane), 0.3 part of benzoyl peroxide (NYPER BMT manufactured by Nippon Oil & Fats Co., Ltd.), and 0.2 part of γ-glycidoxypropylmethoxysilane (manufactured by Shin-Etsu Chemical Co., Ltd.: KBM-403) were blended into 100 parts of the solid content of the resultant acrylic polymer solution to prepare an acrylic pressure-sensitive adhesive solution. Next, the acrylic pressure-sensitive adhesive solution was applied to one surface of a silicone-treated polyethylene terephthalate (PET) film (manufactured by Mitsubishi Chemical Polyester Film Co., Ltd., thickness: 38 um) so that the thickness of a pressure-sensitive adhesive layer after drying became 10 um, followed by drying at 150°C for 3 minutes. Thus, the pressure-sensitive adhesive layer was formed.

[Production Example 3] Production of Laminate with Pressure-sensitive Adhesive Layers on Both Surfaces (Low-refractive Index Reinforcing Portion)

The application liquid for forming a low-refractive index layer prepared in Production Example 1 was applied to a substrate having a thickness of 20 um (acrylic film). The wet thickness (thickness before drying) of the coating layer was about 27 um. The coating layer was treated at a temperature of 100°C for 1 minute to be dried. Thus, a low-refractive index layer (thickness: 0.9 um) was formed on the substrate. The resultant low-refractive index layer had a refractive index of 1.18. Next, the pressure-sensitive adhesive layer (thickness: 10 um) formed in Production Example 2 was arranged on each of both surfaces of the laminate having the configuration "substrate/low-refractive index layer" to produce a laminate with pressure-sensitive adhesive layers on both surfaces.

[Example 1]

The laminate with pressure-sensitive adhesive layers on both surfaces produced in Production Example 3 was cut into a width of 1 mm to produce two low-refractive index double-sided tapes. The low-refractive index double-sided tapes were bonded to both end portions (portions distant inward from both ends by 1 mm each) of a light guide plate (thickness: 400 um, total length in its light-guiding direction: 85 mm) along the light-guiding direction over the entirety of the light-guiding direction (i.e., over 85 mm from the end of the light guide plate on its light-entering side to the end thereof on an opposite side) . Thus, low-refractive index reinforcing portions were arranged. Next, an epoxy-based adhesive was printed in a dot pattern to form an adhesion layer. At this time, the adhesive was printed so that the density of its dots had such a gradient as to continuously increase from the light-entering side of the light guide plate along the

light-guiding direction. The light guide plate having arranged thereon the low-refractive index reinforcing portions and the adhesion layer, and a prism film were bonded to each other via the low-refractive index reinforcing portions and the adhesion layer to produce an optical laminate. The resultant optical laminate was subjected to the evaluations (II) and (III). The results are shown in Table 1.

[Example 2]

An optical laminate was produced in the same manner as in Example 1 except that the low-refractive index reinforcing portions were arranged by bonding each of the two low-refractive index double-sided tapes from the end of the light guide plate on the light-entering side to the central portion thereof (i.e., to a length corresponding to 50% of the total length of the light guide plate in the light-guiding direction). The resultant optical laminate was subjected to the same evaluations as those of Example 1. The results are shown in Table 1.

[Comparative Example 1]

An optical laminate was produced in the same manner as in Example 1 except that no low-refractive index reinforcing portions were arranged. The resultant optical laminate was subjected to the same evaluations as those of Example 1. The results are shown in Table 1.

[Comparative Example 2]

An optical laminate was produced in the same manner as in Example 1 except that black double-sided tapes were used instead of the low-refractive index double-sided tapes. The resultant optical laminate was subjected to the same evaluations as those of Example 1. The results are shown in Table 1.

[Comparative Example 3]

Double-sided tapes were produced in the same manner as in Production Example 3 except that no low-refractive index layer was formed (i.e., the pressure-sensitive adhesive layers were formed on both sides of the acrylic film serving as a substrate), and an optical laminate was produced in the same manner as in Example 1 except that the double-sided tapes were used. The resultant optical laminate was subjected to the same evaluations as those of Example 1. The results are shown in Table 1.

[Comparative Example 4]

An optical laminate was produced in the same manner as in Example 1 except that the position at which the low-refractive index reinforcing portion was arranged was changed. Specifically, the low-refractive index reinforcing portion was arranged in a portion distant from the end of the light guide plate on the light-entering side by 10 mm over the entirety of the widthwise direction of the light guide plate. The resultant optical laminate was subjected to the same evaluations as those of Example 1. The results are shown in Table 1.

Table 1

| | Brightness unevenness | Strength |
|---|---|---|
| Example 1 | ○ | ○ |
| Example 2 | ○ | ○ |
| Comparative Example 1 | ○ | × |
| Comparative Example 2 | × | ○ |
| Comparative Example 3 | × | ○ |
| Comparative Example 4 | × | ○ |

As is apparent from Table 1, according to Examples of the present invention, an optical laminate, which has high brightness, is suppressed in brightness unevenness, and is excellent in strength as an integrated product, can be obtained. Comparative Example 1 in which no reinforcing portions were arranged had an insufficient strength as an integrated product. In Comparative Example 2 in which the reinforcing portions had light-absorbing properties, a bright

region reduced in size. In Comparative Example 3 in which the reinforcing portions had high refractive indices, light leakage occurred from the vicinities of the reinforcing portions. In Comparative Example 4 in which the low-refractive index reinforcing portion was arranged in the end portion of the light guide plate on the light-entering side, large light leakage occurred in the end portion.

Industrial Applicability

The optical laminate of the present invention may be suitably used in an optical apparatus configured to extract light with a light guide plate (e.g., an image display apparatus or a lighting apparatus).

Reference Signs List

**10** light guide plate
**20** adhesion layer
**30** optical member
**40** low-refractive index reinforcing portion
**41** substrate
**42** low-refractive index layer
**100** optical laminate

## Claims

1. An optical laminate (100), comprising:

   a light guide plate (10);
   an adhesion layer (20); and
   an optical member (30) laminated on the light guide plate (10) via the adhesion layer,
   wherein the adhesion layer (20) is formed in a dot pattern in plan view, and a density of the dots has such a gradient as to increase from a light-entering side of the light guide plate (10) along a light-guiding direction thereof, and
   **characterized in that**
   low-refractive index reinforcing portions (40) are arranged in both end portions of the light guide plate (10) along the light-guiding direction, and **in that** the low-refractive index reinforcing portions (40) each include a substrate (41), a low-refractive index layer (42) formed on the substrate (40), and pressure-sensitive adhesive layers arranged as outermost layers on both surfaces thereof.

2. The optical laminate (100) according to claim 1, wherein the low-refractive index layer has a refractive index of 1.25 or less.

3. The optical laminate (100) according to any one of claims 1 to 2, wherein a total width of the low-refractive index reinforcing portions accounts for 10% or less of a width of the light guide plate.

4. The optical laminate (100) according to any one of claims 1 to 3, wherein the low-refractive index reinforcing portions (40) each have a total light transmittance of 85% or more.

5. The optical laminate (100) according to any one of claims 1 to 4, wherein another low-refractive index reinforcing portion is further arranged in an end portion of the light guide plate (10) on a side opposite to the light-entering side.

## Patentansprüche

1. Optisches Laminat (100), umfassend:

   eine Lichtleiterplatte (10);
   eine Klebeschicht (20); und

ein optisches Element (30), das über die Klebeschicht auf die Lichtleiterplatte (10) laminiert ist,
wobei die Klebeschicht (20) in der Draufsicht in einem Punktmuster ausgebildet ist und eine Dichte der Punkte einen solchen Gradienten aufweist, dass sie von einer Lichteintrittsseite der Lichtleiterplatte (10) entlang einer Lichtleitrichtung derselben zunimmt, und
**dadurch gekennzeichnet, dass** Verstärkungsabschnitte (40)
mit niedrigem Brechungsindex in beiden Endabschnitten der Lichtleiterplatte (10) entlang der Lichtleitrichtung angeordnet sind, und
die Verstärkungsabschnitte (40) mit niedrigem Brechungsindex jeweils ein Substrat (41), eine Schicht (42) mit niedrigem Brechungsindex, die auf dem Substrat (40) ausgebildet ist, und druckempfindliche Klebstoffschichten, die als äußerste Schichten auf beiden Oberflächen davon angeordnet sind, umfassen.

2. Optisches Laminat (100) gemäß Anspruch 1, wobei die Schicht mit niedrigem Brechungsindex einen Brechungsindex von 1,25 oder weniger aufweist.

3. Optisches Laminat (100) gemäß mindestens einem der Ansprüche 1 bis 2, wobei die Gesamtbreite der Verstärkungssbschnitte mit niedrigem Brechungsindex 10 % oder weniger der Breite der Lichtleiterplatte ausmacht.

4. Optisches Laminat (100) gemäß mindestens einem der Ansprüche 1 bis 3, wobei die Verstärkungsabschnitte (40) mit niedrigem Brechungsindex jeweils eine Gesamtlichtdurchlässigkeit von 85 % oder mehr aufweisen.

5. Optisches Laminat (100) gemäß mindestens einem der Ansprüche 1 bis 4, wobei ein weiterer Verstärkungsabschnitt mit niedrigem Brechungsindex ferner in einem Endabschnitt der Lichtleiterplatte (10) auf einer der Lichteintrittsseite gegenüberliegenden Seite angeordnet ist.

## Revendications

1. Stratifié optique (100) comprenant :

une plaque de guidage de lumière (10) ;
une couche d'adhésion (20) ; et
un élément optique (30) stratifié sur la plaque de guidage de lumière (10) via la couche d'adhésion,
dans lequel la couche d'adhésion (20) est formée dans un motif de points dans une vue en plan, et une densité des points présente un gradient de sorte à augmenter depuis un côté d'incidence de la lumière de la plaque de guidage de lumière (10) le long d'une direction de guidage de lumière de celle-ci, et
**caractérisé en ce que** des portions de renforcement à faible indice de réfraction (40) sont agencées dans les deux portions d'extrémité de la plaque de guidage de lumière (10) le long de direction de guidage de lumière, et **en ce que** les portions de renforcement à faible indice de réfraction (40) incluent chacune un substrat (41), une couche à faible indice de réfraction (42) formée sur le substrat (40), et des couches adhésives sensibles à la pression agencées comme les couches les plus extérieures sur les deux surfaces de celle-ci.

2. Stratifié optique (100) selon la revendication 1, dans lequel la couche à faible indice de réfraction présente un indice de réfraction de 1,25 ou moins.

3. Stratifié optique (100) selon l'une quelconque des revendications 1 à 2, dans lequel une largeur totale des portions de raccordement à faible indice de réfraction compte pour 10 % ou moins d'une largeur de la plaque de guidage de lumière.

4. Stratifié optique (100) selon l'une quelconque des revendications 1 à 3, dans lequel les portions à faible indice de réfraction (40) présentent chacune une transmission de lumière totale de 85 % ou plus.

5. Stratifié optique (100) selon l'une quelconque des revendications 1 à 4, dans lequel une autre portion de renforcement à faible indice de réfraction est en outre agencée dans une portion d'extrémité de la plaque de guidage de lumière (10) sur un côté opposé au côté d'incidence de la lumière.

FIG. 1

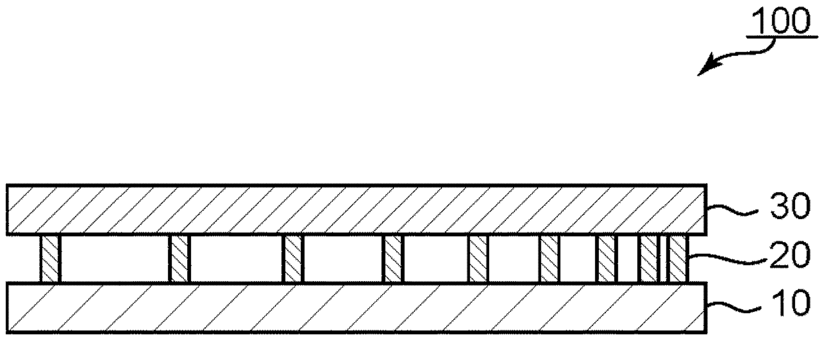


FIG. 2

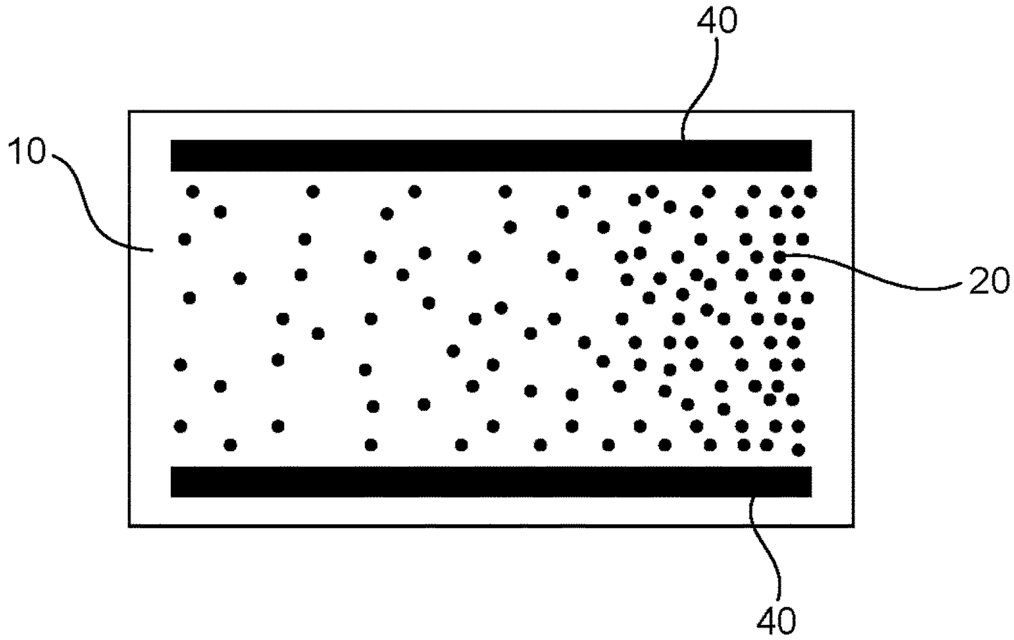

FIG. 3

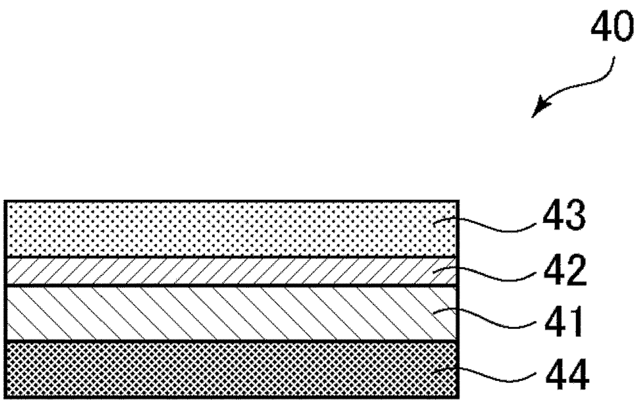

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20100157623 A1
- US 2011149554 A1
- JP H1010325 A
- JP 2018123299 A
- JP 10062626 A
- WO 2004113966 A1
- JP 2013254183 A
- JP 2012189802 A
- JP 2001188104 A
- JP 1317115 A